# DEMANDE DE BREVET EUROPEEN

(11) **EP 2 463 788 A1**
(43) Date de publication de la demande: **13.06.2012**
(21) Numéro de dépôt: 11192221.7
(22) Date de dépôt: 06.12.2011
(51) Int. Cl.: G06F 17/30

(54) **Systeme de selection de mots-clefs, procede et base de donnees mettant en oeuvre un tel systeme**

(30) Priorité: 10.12.2010 FR 1060397
(71) Demandeur: Alcatel Lucent, 75007 Paris (FR)
(72) Inventeur: Pergament, David, 91620 NOZAY (FR); Ghorbel, Mahmoud, 91620 NOZAY (FR); Bouzid, Makram, 91620 NOZAY (FR); Aghasaryan, Armen, 91620 NOZAY (FR)
(74) Mandataire: Mouney, Jérôme

(57) **Abrégé**

La présente invention concerne un système de sélection de mots-clefs (102, 104) associés à des contenus multimédia accessibles à des utilisateurs (106) via un réseau de télécommunication (108), ces mots-clefs (102, 104) étant mis en oeuvre par ces utilisateurs (106) pour définir de façon sémantique lesdits contenus multimédia, caractérisé en ce qu'il comprend:
- des moyens (112) pour générer, pour chaque utilisateur (106), un profil personnel (112) de codage sémantique identifiant des correspondances entre un mot-clef mis en oeuvre par cet utilisateur (106) et un contenu défini par ledit mot-clef,
- des moyens (122) pour déterminer des distances sémantiques entre lesdits profils personnels (112) à partir de mots-clefs relatifs à des contenus identiques, et
- des moyens pour générer des ensembles (120) d'utilisateurs homogènes tels que la distance sémantique entre le profil personnel (112) d'un premier utilisateur (120₁) d'un ensemble (120) et les profils personnels (112) des seconds utilisateurs (120₂) du même ensemble (120) soit inférieure à un seuil donné.

## Description

La présente invention concerne un système de sélection de mots-clefs, notamment associés à des contenus multimédias afin de définir et/ou de recommander ces derniers vis-à-vis d'utilisateurs d'un réseau de télécommunication. L'invention concerne également un procédé et une base de données mettant en oeuvre un tel procédé.

Il est connu d'utiliser des mots-clefs ― également dénommés tag en anglais ― comme métadonnées associées à des contenus disponibles via un réseau de télécommunication tel que le réseau Internet.

Ces métadonnées codent une description sémantique de tels contenus de telle sorte que, par exemple, la recherche, l'identification et/ou la recommandation d'un contenu puisse(nt) être effectuée(s) en utilisant de tels mots-clefs associés audit contenu.

Il apparaît ainsi que la détermination de mots-clefs pour un contenu est un procédé essentiel pour l'accès et la gestion de contenus multimédia dans un réseau de télécommunications.

Afin d'améliorer la détermination de mots-clefs vis-à-vis d'un contenu ou la recherche de contenus par mots-clefs, il est connu de mettre en oeuvre des procédés de sélection de mots-clefs tels que l'utilisation préalable de mots-clefs par de premiers utilisateurs est prise en compte pour assister la prise en compte de mots-clefs d'un second utilisateur. Plus précisément :
- Selon un premier procédé utilisant un filtrage collaboratif, ou filtrage CF pour « Collaborative Filtering » en anglais, on utilise des notations de contenus effectuées par des utilisateurs, typiquement relatives à la qualité et/ou à l'intérêt d'un contenu, pour déterminer des groupes d'utilisateurs notant des contenus similaires, voire identiques, avec des notes similaires, voire identiques.

Un tel procédé se base donc sur la création de groupes d'utilisateurs ayant des affinités communes pour des contenus communs. Il permet notamment de proposer à un premier utilisateur des contenus appréciés ― c'est-à-dire bien notés ― par d'autres seconds utilisateurs du groupe auquel appartient ce premier utilisateur.

Toutefois, un tel procédé présente l'inconvénient de limiter les utilisateurs considérés, pour la recommandation/définition de contenus et/ou de mots-clefs vis-à-vis d'un premier utilisateur, aux seconds utilisateurs ayant exclusivement des affinités similaires, voire identiques, audit premier utilisateur. Dès lors on exclue dans la sélection de mots-clefs pouvant définir un contenu la contribution d'utilisateurs tiers ayant des affinités distinctes mais pouvant décrire un contenu par des mots-clefs pertinents, c'est-à-dire similaires, voire identiques, aux mots clefs qui eussent été utilisés par le premier utilisateur. - Selon un second procédé entièrement automatique, on détermine des mots-clefs sur des bases d'extraction automatique de mots-clefs à partir d'un contenu ou d'analyses ontologiques telles qu'un utilisateur est forcé d'utiliser des mots-clefs prédéterminés ou proposés, typiquement pour remplir des champs d'information prédéterminés. Dans certains cas, les mots-clefs sont proposés à partir d'informations de géolocalisations ou de mots-clefs récurrents parmi les utilisateurs du procédé.

Toutefois, de tels procédés imposent des contraintes, notamment de mots-clefs, qui soulèvent des problèmes lorsqu'un utilisateur veut individualiser sa recommandation/qualification d'un contenu.
- Selon un troisième procédé partiellement automatique, on recommande des mots-clefs à un premier utilisateur, par exemple obtenus à partir:
   i) de mots-clefs fréquemment utilisés par ce premier utilisateur. Toutefois, un tel procédé présente le problème de proposer des mots-clefs en fonction de l'utilisation statistique de ces derniers, sans réel lien avec le contenu considéré.
   ii) de mots-clefs fréquemment utilisés par de seconds utilisateurs et proches des mots-clefs mis en oeuvre par le premier utilisateur, cette proximité étant déterminée au moyen de logiciels connus permettant de déterminer une proximité sémantique entre différents (groupes de) mots. Toutefois, un tel procédé peut mettre en oeuvre des mots-clefs fréquemment utilisés par de seconds utilisateurs avec des sens distincts et/ou des contenus distincts du sens et/ou des contenus auquel le premier utilisateur associe ces mots-clefs.
   iii) de règles de mappage de mots clés personnels de l'utilisateur, organisés préalablement selon un système de catégories sémantiques propres à cet utilisateur. Toutefois, un tel procédé ne prend pas en compte les mots-clefs utilisés par de seconds utilisateurs.

La présente invention vise à résoudre au moins un des inconvénients précédemment mentionnés. Elle résulte de la constatation que l'analyse de mots-clefs pour la mise en oeuvre de procédés de sélections de mots-clefs satisfaisants, c'est-à-dire ayant un sens sémantique reconnu par un utilisateur vis-à-vis du contenu auquel ce dernier associe ces mots-clefs, requiert une association stricte d'un mot-clef (subjectif) à un contenu (objectif).

C'est pourquoi, la présente invention concerne un système de sélection de mots-clefs associés à des contenus multimédia accessibles à des utilisateurs via un réseau de télécommunication, ces mots-clefs étant mis en oeuvre par ces utilisateurs pour définir de façon sémantique lesdits contenus multimédia, caractérisé en ce qu'il comprend:
- des moyens pour générer, pour chaque utilisateur, un profil personnel de codage sémantique identifiant des correspondances entre des mots-clefs mis en oeuvre par cet utilisateur et des contenus définis par lesdits mots-clefs,
- des moyens pour déterminer des distances sémantiques entre lesdits profils personnels à partir de mots-clefs relatifs à des contenus identiques, et
- des moyens pour générer des ensembles d'utilisateurs homogènes tels que la distance sémantique entre le profil personnel d'un premier utilisateur d'un ensemble et les profils personnels des seconds utilisateurs du même ensemble soit inférieure à un seuil donné.

Grâce à un tel système, les mots-clefs associés à un contenu multimédia par un premier utilisateur sont obtenus automatiquement à partir de mots-clefs préalablement mis en oeuvre par des seconds utilisateurs ayant un profil personnel sémantique fortement similaire, voire identique, au profil personnel sémantique du premier utilisateur.

De fait, seuls des utilisateurs ayant mis en oeuvre des mots-clefs vis-à-vis de contenus identiques sont pris en compte pour définir une distance sémantique entre des mots-clefs, de telle sorte que le risque d'une utilisation erronée ou faussée du sens de ces mots-clefs entre les différents utilisateurs est limité.

Par ailleurs, un système conforme à l'invention permet de recommander/utiliser des mots-clefs vis-à-vis d'un premier utilisateur ayant des affinités distinctes de seconds utilisateurs de son ensemble. En d'autres termes, l'invention permet de considérer un nombre important d'utilisateurs pour sélectionner des mots-clefs pertinents vis-à-vis d'un utilisateur.

Finalement, un système conforme à l'invention permet néanmoins à un premier utilisateur d'utiliser des mots-clefs personnalisés et n'impose donc pas des mots-clefs à un utilisateur.

Dans une réalisation, le système comprend des moyens pour générer des ensembles d'utilisateurs homogènes en imposant un nombre minimal de contenus identiques dans les profils personnels des utilisateurs d'un même ensemble.

Selon une réalisation, le système comprend des moyens pour générer des ensembles d'utilisateurs homogènes en mettant en oeuvre:
- des moyens pour considérer le profil personnel d'un premier utilisateur à partir duquel sont mesurées des distances sémantiques envers des profils personnels d'autres utilisateurs, et
- des moyens pour générer un ensemble d'utilisateurs homogène en sélectionnant des utilisateurs dont le profil personnel présente une distance sémantique, vis-à-vis dudit premier utilisateur, inférieure à un seuil donné.

Dans une réalisation, le procédé comprend des moyens pour modifier dynamiquement le seuil donné afin d'accroître ou de diminuer le nombre d'utilisateurs compris dans un ensemble homogène.

Dans une réalisation, le système comprend des moyens pour utiliser, conjointement à un ensemble homogène, au moins un autre des ensembles suivants :
- un ensemble populaire identifiant, pour un même contenu, la fréquence d'attribution de mots clefs dans l'ensemble des profils personnels,
- un ensemble expert identifiant des mots-clefs attribués à un même contenu par des experts d'un domaine relatif audit contenu et/ou par des moyens automatiques (logiciels) attribuant automatiquement des mots-clefs pour ledit même contenu.

Selon une réalisation, le système comprend des moyens pour modifier l'importance d'un mot-clef pour la détermination d'une distance sémantique de telle sorte que cette importance soit d'autant plus faible que le mot-clef est fréquemment utilisé pour un même contenu.

Dans une réalisation, le système comprend des moyens pour recommander un contenu multimédia et/ou des moyens pour recommander des mots-clefs à un utilisateur en utilisant des mots-clefs sélectionnés au moyen d'un ensemble homogène.

L'invention concerne également un procédé de sélection de mots-clefs associés à des contenus multimédia accessibles à des utilisateurs via un réseau de télécommunication, ces mots-clefs étant mis en oeuvre par ces utilisateurs pour définir de façon sémantique lesdits contenus multimédia, caractérisé en ce qu'il comprend les étapes suivantes:
- l'étape de générer, pour chaque utilisateur, un profil personnel de codage sémantique identifiant des correspondances entre un mot-clef mis en oeuvre par cet utilisateur et un contenu défini par ledit mot-clef,
- l'étape de déterminer des distances sémantiques entre lesdits profils personnels à partir de mots-clefs relatifs à des contenus identiques, et
- l'étape de générer des ensembles d'utilisateurs homogènes tels que la distance sémantique entre le profil personnel d'un premier utilisateur d'un ensemble et les profils personnels des seconds utilisateurs du même ensemble soit inférieure à un seuil donné de façon à mettre en oeuvre un système conforme à l'une des réalisations précédentes.

Dans une réalisation, l'étape de génération des ensembles comprend les étapes suivantes:
- l'étape de considérer le profil personnel d'un premier utilisateur à partir duquel sont mesurées des distances sémantiques envers des profils personnels d'autres utilisateurs, et
- l'étape de générer un ensemble d'utilisateurs homogène en sélectionnant les utilisateurs dont le profil personnel présente une distance sémantique, vis-à-vis dudit premier utilisateur, inférieure à un seuil donné.

L'invention concerne également une base de données de mots-clefs associés à des contenus multimédia accessibles à des utilisateurs via un réseau de télécommunication, ces mots-clefs étant mis en oeuvre par ces utilisateurs pour définir de façon sémantique lesdits contenus multimédia, caractérisée en ce que lesdits mots-clefs sont obtenus à partir d'un système conforme à l'une des réalisations précédentes.

L'invention concerne également un programme d'ordinateur destiné à la sélection de mots-clefs associés à des contenus multimédia accessibles à des utilisateurs via un réseau de télécommunication, ces mots-clefs étant mis en oeuvre par ces utilisateurs pour définir de façon sémantique lesdits contenus multimédia, caractérisé en ce qu'il comprend des moyens pour effectuer au moins une des étapes suivantes:
- l'étape de générer, pour chaque utilisateur, un profil personnel de codage sémantique identifiant des correspondances entre un mot-clef mis en oeuvre par cet utilisateur et un contenu défini par ledit mot-clef,
- l'étape de déterminer des distances sémantiques entre lesdits profils personnels à partir de mots-clefs relatifs à des contenus identiques, et
- l'étape de générer des ensembles d'utilisateurs homogènes tels que la distance sémantique entre le profil personnel d'un premier utilisateur d'un ensemble et les profils personnels des seconds utilisateurs du même ensemble soit inférieure à un seuil donné de façon à mettre en oeuvre un système conforme à l'une des réalisations précédentes.

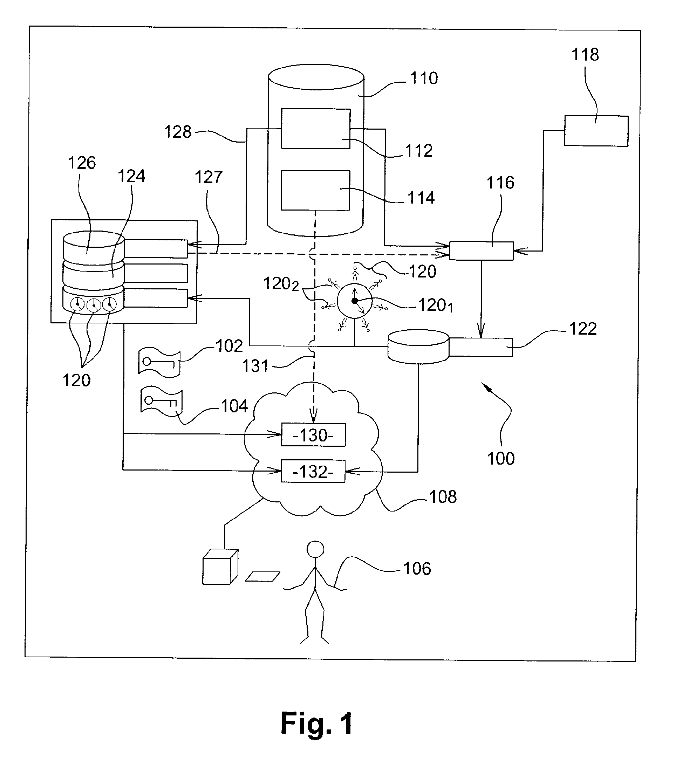

D'autres caractéristiques et avantages de l'invention apparaîtront à la lumière de la description ci-dessous, effectuée à titre illustratif et non limitatif, en référence à l'unique figure ci-jointe sur laquelle est représenté un système conforme à l'invention.

En référence à cette figure est représenté un système 100 conforme à l'invention, c'est-à-dire dédié à la sélection de mots-clefs 102,104 associés à des contenus multimédia accessibles à un utilisateur 106 via un réseau de télécommunication 108 tel que le réseau Internet.

Typiquement ces mots-clefs 102, 104 sont mis en oeuvre par l'utilisateur 106 pour définir de façon sémantique lesdits contenus multimédia, notamment afin de rechercher ces derniers à l'aide d'un navigateur ou « browser », sur le réseau Internet, et/ou pour « tager » (c'est-à-dire associer des mots-clefs) un contenu, par exemple en créant un profil personnel, au moyen d'un nuage de tags.

Ces mots-clefs 102, 104 peuvent également être utilisés pour proposer à l'utilisateur 106 des contenus qui semblent correspondre à son profil d'utilisateur. Par exemple, un utilisateur abonné à un service de vente en ligne peut se voir proposer des articles correspondant à son domaine d'activité et/ou des mots-clefs pour définir un produit vendu par ce service.

Afin d'optimiser ces opérations et conformément à l'invention, le système 100 comprend des moyens pour effectuer les opérations suivantes:
i) générer, pour chaque utilisateur 106, un profil personnel 112 de codage sémantique identifiant les correspondances entre les mots-clefs mis en oeuvre par cet utilisateur 106, par exemple pour définir ou rechercher un contenu, et ce contenu défini/recherché par chacun de ces mots-clefs.

Dans le système 100, cette opération est effectuée par une base de données 110 comprenant des moyens pour stocker, d'une part, ces profils personnels 112 et, d'autre part, des informations diverses 114 relatives à l'utilisateur 116 telles que: son nom, son identité, des achats en ligne et/ou des notations des contenus acquis en ligne.

Le système 100 comprend également des moyens pour déterminer des distances sémantiques entre lesdits profils personnels en considérant exclusivement des contenus identiques.

Dans le système 100, cette opération est effectuée par un analyseur sémantique 116 qui met en oeuvre des moyens logiciels 118 pour déterminer une distance entre des mots, les mots considérés étant dans ce cas des mots-clefs définissant un même contenu.

Pour déterminer cette distance entre des mots, on peut utiliser, par exemple, une exigence de similarité absolue entre les mots ― un mot au pluriel étant considéré différent d'un mot au singulier - de la logique floue - qui autorise des catégorisations non binaires (autre que 0 ou 1) et permet de définir un terme comme étant plus ou moins proche d'un autre - de la lemmatisation - qui rassemble en une seule entité les différentes flexions d'un mot ou différentes conjugaisons, de telle sorte que, par exemple, une égalité stricte peut être considérée entre les mots « BU » et « Bibliothèque Universitaire» ― de la stemmatisation (de l'anglais « stemming ») - qui réduit un mot à sa racine.

Dans cette réalisation, l'analyseur détermine les distances entre des utilisateurs en imposant un minimum de contenus communs dans les profils personnels des utilisateurs analysés mais, dans d'autres réalisations, cette condition peut être implémentée à une autre étape du procédé.
ii) générer des ensembles 120 d'utilisateurs homogènes 106 tels que la distance sémantique entre un premier utilisateur 120₁ d'un ensemble 120 et les seconds utilisateurs 120₂ du même ensemble 120 soit inférieure à un seuil donné, étant entendu que ce critère est imposé pour cet unique premier utilisateur 120₁ de telle sorte que les distances sémantiques entre lesdits seconds utilisateurs 120₂ puissent être supérieures audit seuil.

Dans le système 100, cette génération est effectuée par un générateur 122 qui met en oeuvre les étapes suivantes:
- l'étape de considérer le profil personnel d'un premier utilisateur 106 à partir duquel sont mesurés des distances sémantiques vis-à-vis des profils personnels des autres utilisateurs, et
- l'étape de générer un ensemble d'utilisateur homogène en sélectionnant les utilisateurs dont le profil personnel a une distance sémantique inférieure à un seuil donné.

Ainsi les ensembles 122, également dénommés « communautés », sont centrés autour d'un premier utilisateur 120₁ avec une précision, ou proximité sémantique, qui peut être accrue dynamiquement afin de passer d'un ensemble large ― présentant un nombre relativement élevé d'utilisateurs ayant une proximité sémantique vis-à-vis du premier utilisateur 106 relativement faible en moyenne ― à un ensemble étroit - présentant un nombre relativement faible d'utilisateurs et une proximité sémantique relativement forte vis-à-vis du premier utilisateur 106 en moyenne. Réciproquement, la proximité sémantique peut être diminuée pour passer d'un ensemble étroit vers un ensemble large

En d'autres termes, l'homogénéité sémantique d'un ensemble peut être modifiée afin d'optimiser la sélection des mots-clefs entre deux critères antagonistes, à savoir l'augmentation du nombre d'utilisateurs pris en compte pour générer un ensemble et la proximité sémantique des utilisateurs au sein de l'ensemble.

Grâce à l'invention, la recommandation d'un contenu ― étape 130 ― peut être effectuée à partir, non seulement d'informations relatives à des contenus préalablement acquis (flèche 131) et aux notes (ratings) associés auxdits contenus, comme dans l'art antérieur, mais également à partir d'un ensemble 120 regroupant des utilisateurs homogènes vis-à-vis de l'utilisateur 106 considéré, c'est-à-dire présentant un profil personnel proche.

En d'autres termes, l'invention utilise deux techniques de recommandations à savoir, d'une part, la technique « CB » ou « content based » relative aux affinités d'un utilisateur et, d'autre part, la technique «CF» ou « collaborative Filtering » relative aux affinités de plusieurs personnes qui ont des utilisations similaires, voire identique du réseau Internet. L'invention est donc un procédé hybride, basé à la fois sur le contenu considéré et sur un filtrage collaboratif, délivrant des définitions pertinentes de contenus obtenues grâce à une communauté sémantique définie autour du profil de l'utilisateur considéré.

De même, la recommandation de mots-clefs pour définir un contenu ― étape 132 ― peut être effectuée en considérant l'ensemble 120 regroupant des utilisateurs homogènes vis-à-vis de l'utilisateur 106 considéré, c'est-à-dire présentant un profil personnel proche.

La présente invention est susceptible de nombreuses variantes. Notamment, il est possible qu'un mot-clef et/ou un contenu ne soit pas compris dans les mots-clefs et/ou les contenus mis en oeuvre par les utilisateurs d'un ensemble 120 homogène relatif à un utilisateur 106.

Dans ce cas, cet utilisateur 106 peut modifier dynamiquement le seuil mis en oeuvre, en l'élargissant ou le diminuant, pour générer un nouvel ensemble 120 ayant un nombre d'utilisateurs accru ou réduit. Dans le premier cas, cet utilisateur 106 accroît la possibilité que ce mot-clef et/ou contenu soit compris dans les mots-clefs et/ou les contenus considérés dans l'ensemble mais, en contrepartie, l'homogénéité sémantique de son ensemble est diminuée alors que, dans le second cas, les effets inverses se produisent.

Il est également possible d'obtenir des mots-clefs d'un ensemble 126 populaire identifiant, pour un même contenu, la fréquence d'attribution de mots clefs dans l'ensemble des profils personnels, ces mots-clefs utilisés par un utilisateur étant transmis depuis les profils personnels 112 vers ledit ensemble 126 (interaction 128).

Toutefois, il peut être prévu (étape 127) que l'importance ou le poids d'un mot-clef pour la détermination d'une distance sémantique soit d'autant plus faible que le mot-clef est utilisé ou populaire vis-à-vis d'un contenu, le sens d'un mot-clef étant considéré comme d'autant plus dénué d'importance pour associer des personnes que ce mot-clef est utilisé, pour un même contenu, par de nombreuses personnes.

Il est également possible d'obtenir des mots-clefs d'un ensemble expert identifiant des mots-clefs attribués à un même contenu par des experts d'un domaine relatif audit contenu et/ou par des moyens automatiques (logiciels) attribuant automatiquement des mots-clefs pour un tel même contenu.

Typiquement, un analyseur automatique de pages du Web peut associer, à un domaine technique auquel est dédié un site Web, des mots-clefs identifiés dans les pages Web dudit site et/ou les méta-tags identifiant lesdites pages Web.

Ces ensembles 124 populaire et 126 expert peuvent être utilisés de façon complémentaire ou alternatif à l'ensemble 120 homogène, notamment lorsque ce dernier ne permet pas de recommander un mot-clef ou un contenu. Par exemple, dans cette réalisation et en considérant un utilisateur et un contenu donnés, il convient de considérer les mots-clefs des utilisateurs ayant associés des mots-clefs à ce contenu - ce qui permet d'extraire des mots-clefs populaires de l'ensemble 124 - les mots-clefs des experts humains ou automates associés à ce contenu - ce qui permet d'extraire les mots-clefs experts de l'ensemble 126 ― et les mots-clefs de la communauté sémantique de l'utilisateur considéré associés à ce contenu.

## Revendications

1. Système de sélection de mots-clefs associés à des contenus multimédia accessibles à des utilisateurs via un réseau de télécommunication, ces mots-clefs étant mis en oeuvre par ces utilisateurs pour définir de façon sémantique lesdits contenus multimédia, **caractérisé en ce qu'**il comprend :
- des moyens pour générer, pour chaque utilisateur, un profil personnel de codage sémantique identifiant des correspondances entre un mot-clef mis en oeuvre par cet utilisateur et un contenu défini par ledit mot-clef,
- des moyens pour déterminer des distances sémantiques entre lesdits profils personnels à partir de mots-clefs relatifs à des contenus identiques, et
- des moyens pour générer des ensembles d'utilisateurs homogènes tels que la distance sémantique entre le profil personnel d'un premier utilisateur d'un ensemble et les profils personnels des seconds utilisateurs du même ensemble soit inférieure à un seuil donné, les ensembles étant générés en imposant un nombre minimal de contenus identiques dans les profils personnels des utilisateurs d'un même ensemble.

2. Système selon la revendication 1 **caractérisé en ce qu'**il comprend des moyens pour générer des ensembles (120) d'utilisateurs homogènes en mettant en oeuvre:
- des moyens pour considérer le profil personnel d'un premier utilisateur (120₁) à partir duquel sont mesurées des distances sémantiques envers des profils personnels d'autres utilisateurs, et
- des moyens pour générer un ensemble (120) d'utilisateurs homogène en sélectionnant des utilisateurs (120₂) dont le profil personnel présente une distance sémantique, vis-à-vis dudit premier utilisateur (120₁), inférieure à un seuil donné.

3. Système selon la revendication 2 **caractérisé en ce qu'**il comprend des moyens pour modifier dynamiquement le seuil donné afin d'accroître ou de diminuer le nombre d'utilisateurs compris dans un ensemble (120) homogène.

4. Système selon l'une des revendications précédentes **caractérisé en ce qu'**il comprend des moyens pour utiliser, conjointement à un ensemble homogène (120), au moins un autre des ensembles suivants :
- un ensemble populaire identifiant, pour un même contenu, la fréquence d'attribution de mots clefs dans l'ensemble des profils personnels,
- un ensemble expert identifiant des mots-clefs attribués à un même contenu par des experts d'un domaine relatif audit contenu et/ou par des moyens automatiques (logiciels) attribuant automatiquement des mots-clefs pour un tel même contenu.

5. Système selon la revendication 4 **caractérisé en ce qu'**il comprend des moyens pour modifier l'importance d'un mot-clef pour la détermination d'une distance sémantique de telle sorte que cette importance soit d'autant plus faible que le mot-clef est fréquemment utilisé pour un même contenu.

6. Système selon l'une des revendications précédentes **caractérisé en ce qu'**il comprend des moyens pour recommander un contenu multimédia et/ou des moyens (132) pour recommander des mots-clefs à un utilisateur (106) en utilisant des mots-clefs sélectionnés au moyen d'un ensemble (120) homogène.

7. Procédé de sélection de mots-clefs (102, 104) associés à des contenus multimédia accessibles à des utilisateurs (106) via un réseau de télécommunication (108), ces mots-clefs (102, 104) étant mis en oeuvre par ces utilisateurs (106) pour définir de façon sémantique lesdits contenus multimédia, **caractérisé en ce qu'**il comprend les étapes suivantes:
- l'étape (112) de générer, pour chaque utilisateur (106), un profil personnel (112) de codage sémantique identifiant des correspondances entre un mot-clef mis en oeuvre par cet utilisateur (106) et un contenu défini par ledit mot-clef,
- l'étape (122) de déterminer des distances sémantiques entre lesdits profils personnels (112) à partir de mots-clefs relatifs à des contenus identiques, et
- l'étape de générer des ensembles (120) d'utilisateurs homogènes tels que la distance sémantique entre le profil personnel (112) d'un premier utilisateur (120₁) d'un ensemble (120) et les profils personnels (112) des seconds utilisateurs (120₂) du même ensemble (120) soit inférieure à un seuil donné de façon à mettre en oeuvre un système conforme à l'une des revendications précédentes.

8. Procédé selon la revendication 7 **caractérisé en ce que** l'étape (120) de génération des ensembles comprend les étapes suivantes:
- l'étape de considérer le profil personnel d'un premier utilisateur à partir duquel sont mesurées des distances sémantiques envers des profils personnels d'autres utilisateurs, et
- l'étape de générer un ensemble (120) d'utilisateurs homogène en sélectionnant les utilisateurs dont le profil personnel présente une distance sémantique, vis-à-vis dudit premier utilisateur, inférieure à un seuil donné.

9. Base de données de mots-clefs (102, 104) associés à des contenus multimédia accessibles à des utilisateurs (106) via un réseau de télécommunication (108), ces mots-clefs (102, 104) étant mis en oeuvre par ces utilisateurs (106) pour définir de façon sémantique lesdits contenus multimédia, **caractérisée en ce que** lesdits mots-clefs sont obtenus à partir d'un système conforme à l'une des revendications 1 à 6.

10. Programme d'ordinateur destiné à la sélection de mots-clefs (102, 104) associés à des contenus multimédia accessibles à des utilisateurs (106) via un réseau de télécommunication (108), ces mots-clefs (102, 104) étant mis en oeuvre par ces utilisateurs (106) pour définir de façon sémantique lesdits contenus multimédia, **caractérisé en ce qu'**il comprend des moyens pour effectuer au moins une des étapes suivantes:
- l'étape (112) de générer, pour chaque utilisateur (106), un profil personnel (112) de codage sémantique identifiant des correspondances entre un mot-clef mis en oeuvre par cet utilisateur (106) et un contenu défini par ledit mot-clef,
- l'étape (122) de déterminer des distances sémantiques entre lesdits profils personnels (112) à partir de mots-clefs relatifs à des contenus identiques, et
- l'étape de générer des ensembles (120) d'utilisateurs homogènes tels que la distance sémantique entre le profil personnel (112) d'un premier utilisateur (120₁) d'un ensemble (120) et les profils personnels (112) des seconds utilisateurs (120₂) du même ensemble (120) soit inférieure à un seuil donné de façon à mettre en oeuvre un système conforme à l'une des revendications 1 à 6.
